# EUROPÄISCHE PATENTSCHRIFT

(11) **EP 2 673 057 B1**
(45) Veröffentlichungstag und Bekanntmachung des Hinweises auf die Patenterteilung: **27.04.2022**
(21) Anmeldenummer: 12701682.2
(22) Anmeldetag: 24.01.2012
(51) Int. Cl.: A63B 29/02, G01S 19/17, G01S 19/48, G01S 5/02, G06F 1/16, G01S 19/19, H04M 1/72409, H04M 1/72412

(54) **ORTUNGSSYSTEM, DATENERFASSUNGSMODUL GEEIGNET FÜR EIN ORTUNGSSYSTEM SOWIE VERFAHREN ZUR ORTUNG EINER LAWINENVERSCHÜTTETEN-FUNKSIGNALE AUSSENDENDEN EINHEIT**
LOCATING SYSTEM, DATA ACQUISITION MODULE SUITABLE FOR A LOCATING SYSTEM AND METHOD FOR LOCATING A UNIT TRANSMITTING AVALANCHE RADIO SIGNALS
SYSTÈME DE LOCALISATION, MODULE DE DÉTECTION DE DONNÉES ADAPTÉ À UN SYSTÈME DE LOCALISATION ET PROCÉDÉ POUR LOCALISER UNE UNITÉ ÉMETTANT DES SIGNAUX RADIO SOUS UNE AVALANCHE

(30) Priorität: 07.02.2011 DE 102011010499
(43) Veröffentlichungstag der Anmeldung: 18.12.2013
(73) Patentinhaber: Fraunhofer-Gesellschaft zur Förderung der angewandten Forschung e.V., 80686 München (DE); Protime GmbH, 83209 Prien am Chiemsee (DE)
(72) Erfinder: INNINGER, Wolfgang, 83229 Aschau (DE); WAIZMANN, Gerd, 83083 Riedering (DE); RIESER, Alexander, 83093 Bad Endorf (DE); SCHULZ, Holger, 83064 Raubling (DE); LEUTNER, Gerhard, 83233 Bernau am Chiemsee (DE)
(74) Vertreter: Rösler, Uwe
(86) Internationale Anmeldenummer: PCT/EP2012/000320
(87) Internationale Veröffentlichungsnummer: WO 2012/107171

(56) Entgegenhaltungen:
- EP-A1- 1 577 679
- DE-A1- 10 044 813
- DE-U1- 29 922 217

## Beschreibung

### Technisches Gebiet

Die Erfindung bezieht sich auf ein Ortungssystem zur Lawinenverschüttetensuche mit einem Datenerfassungsmodul für Funksignale sowie mit einem mobilen Kommunikationsendgerät. Ferner wird ein Datenerfassungsmodul für Funksignale beschrieben, das für das Ortungssystem zur Lawinenverschüttetensuche geeignet ist. Schließlich umfasst die Erfindung ein Verfahren zur Ortung einer Lawinenverschütteten-Funksignale aussendenden Einheit unter Verwendung des Ortungssystems.

### Stand der Technik

Die Anzahl an Wintersportlern die ein Lawinenverschütteten- Such- und Ortungsgerät, im Folgenden kurz LVS- Gerät, mit sich führen, ist relativ niedrig, selbst im Bereich der Risikogruppen (Variantengeher, Tourengeher etc.).

Eine Verbesserung dieser Situation ist nicht zu erwarten, da die Hemmschwelle zum Kauf eines LVS- Gerätes zunehmend größer wird. Dies ist auf die Preisentwicklung bei den am Markt erhältlichen LVS- Geräten zurückzuführen, welche mit der immer aufwendigeren und komplexeren Ausstattung und Funktionalität, z. B. fortlaufende Zunahme an verbauter Sensorik, größere bzw. leistungsstärkere Displays etc., moderner LVS- Geräte einhergeht.

LVS- Geräte nach dem Stand der Technik dienen ausschließlich der Ortung von Lawinenopfern und bieten damit darüber hinaus keinen weiteren Nutzen für den Anwender. Dies hebt die Hemmschwelle in Bezug auf den Kauf eines solchen Gerätes zusätzlich an.

Der zunehmende Bedarf an technischen Ressourcen digitaler LVS- Geräte der letzten Generation, insbesondere in Form von Rechenleistung des eingesetzten Mikrorechners (CPU), nebst zugehörigem Betriebssystem und Anwendungssoftware für die verbaute CPU, von Sensorik und Ausgabemitteln wie Displays, führt außerdem zu einem Bedarf an erhöhter Akkukapazität bzw. bei vorgegebenem Bauvolumen zu einer verminderten Akkulaufzeit. Die Benutzer müssen vor der Nutzung regelmäßig kontrollieren, ob eine ausreichende Energieversorgung gewährleistet ist.

Der niedrigen Anzahl an mit LVS- Geräten ausgestatteten Wintersportlern auf der einen Seite steht die zunehmende Verbreitung mobiler Kommunikationsendgeräte, insbesondere von in Form von Smartphones, PDAs, Palms^{(R)} etc., auf der anderen Seite gegenüber. Da diese Geräte über immer mehr Rechenleistung, Displayfähigkeiten und eingebauter Sensorik verfügen und zudem als Massenprodukte immer mehr zu Alltagsgeräten werden, besteht eine hohe Wahrscheinlichkeit, dass ein Wintersportler über ein solches Gerät verfügt und in einer Notsituation auf ein derartiges Gerät zurückgreifen kann, sofern dies über die für die anzunehmende Notfallsituation notwendige Funktionalität verfügt.

Aus der DE 101 59 747 C1 ist eine Mobilfunk-Kommunikationsvorrichtung zu entnehmen, die wenigstens zwei jeweils um eine zusätzliche Sende- und Empfangseinheit für Notfunksignale ergänzte Mobiltelefone aufweist und eine Ortung eines aufzufindenden Mobiltelefons mit dem anderen Mobiltelefon ermöglichen. Hierzu sendet jeweils ein Mobiltelefon auf einer dem Mobilfunkband nahe liegenden Frequenz Notsignale aus, die vom anderen Mobiltelefon empfangen und in entsprechende Entfernungsinformationen umgesetzt werden.

Die Druckschrift US 6,314281 B1 beschreibt ein Ortungssystem für Mobilfunktelefone mit dem eine Ortsbestimmung eines Mobilfunktelefons unter Nutzung des in lokale Funkzellen eingeteilten Mobilfunknetzes möglich ist.

In der Druckschrift DE 101 59 747 C1 ist eine Mobilfunk-Kommunikationsvorrichtung beschrieben, die neben der konventionellen Mobilfunkkommunikation einen kodierten und autorisierten Funkdatenaustausch zwischen zwei bestimmt ausgewählten Mobilfunktelefonen ermöglicht. Dieses System ist für eine Partnersuch-Kommunikation ausgelegt.

### Darstellung der Erfindung

Aufgabe der Erfindung ist, eine Vorrichtung, eine Systemkomponente für ein Gesamtsystems sowie ein Betriebsverfahren für die Vorrichtung bzw. die Systemkomponenten zu schaffen, so dass mobile Kommunikations-endgeräte, vorzugsweise in Form von Smartphones, PDAs, etc. aber auch klassische elektronische Kompasse, GPS- Navigationsgeräte, etc. um die Funktionalität eines LVS- Gerätes erweitert werden sollen. Die erfindungsgemäßen Komponenten sollen die Verbreitung LVS- fähiger Geräte erheblich erhöhen, nicht zuletzt auch deshalb, da Wintersportler insbesondere aus dem Bereich der Risikogruppen ihre mobilen Kommunikationsendgeräte eigens aufgrund ihrer zusätzlichen, neuen Funktionalität als LVS- Gerät mitnehmen würden.

Die erfindungsgemäße Vorrichtung bzw. das damit geschaffene Ortungssystem bzw. das zugehörige Betriebsverfahren ist nicht darauf beschränkt, Lawinenverschüttete aufzuspüren. Grundsätzlich kann die Ortung jeglicher Art von Objekten, also Personen und/oder Gegenstände, vorgenommen werden, wie z. B. im Katastrophenfall, Erdbeben, Gebäudeeinstürze, aber auch um Personen in Paniksituationen aufzuspüren oder z. B. entlaufene Kinder wiederzufinden. Im Folgenden ist der besseren Über-sichtlichkeit wegen schwerpunktmäßig von Lawinenverschütteten die Rede, was beispielhaft zu verstehen ist und keine Einschränkung der Erfindung bzw. deren Schutzumfang auf diesen Anwendungsfall beinhalten soll.

Das lösungsgemäße Ortungssystem zur Lawinenverschüttetensuche mit einem Datenerfassungsmodul zum Erfassen von Funksignalen sowie mit einem mobilen Kommunikationsendgerät, zeichnet sich dadurch aus, dass das Datenerfassungsmodul einen Empfangsteil mit einer Empfangsantenneneinheit umfasst, die zum Empfangen von standardisierten Lawinenverschütteten-Funksignalen, kurz LVS-Ortungssignalen, ausgebildet ist. Das Datenerfassungsmodul weist ein Mittel zur Aufbereitung der empfangenen LVS-Ortungssignale auf und sieht eine Schnittstelle zur drahtgebundenen oder drahtlosen Übertragung der aufbereiteten LVS-Ortungssignale zu dem Kommunikationsendgerät vor. Das mobile Kommunikationsendgerät enthält ein die übertragenen, aufbereiteten LVS-Ortungssignale verarbeitendes Mittel, im Weiteren als Funktionseinheit bezeichnet, die Daten zum Auffinden, kurz Ortungsinformationen, generiert, die auf wenigstens einem Ausgabemedium optisch, akustisch und/oder haptisch wahrnehmbar darstellbar sind. Für einen Nutzer des Ortungssystems stellen diese über das wenigstens eine am Kommunikationsendgerät unmittelbar angebrachte oder zumindest über eine drahtgebundene oder drahtlose Kommunikationsschnittstelle vorgesehene Ausgabemedium darstellbaren Ortungsinformationen Richtungs- und/oder Entfernungsinformationen dar, die intuitiv zur direkten Wegfindung vom aktuellen Ort der Person hin zum aufzufindenden Funksignalsender von der Person umsetzbar sind.

In vorteilhafter Weise ist wenigstens ein Mittel vorgesehen, das das Datenerfassungsmodul mit dem Kommunikationsendgerät lösbar fest miteinander verbindet.

Im Gegensatz zu bekannten Systemen vermag das lösungsgemäße Ortungssystem standardisierte und kommerziell erhältliche LVS-Ortungsgeräte zu nutzen, die in einfachsten Ausführungsvarianten über keinerlei Zusatzausstattungen verfügen müssen.

Gleichwohl das lösungsgemäße Ortungssystem im einfachsten Fall mit einem Datenerfassungsmodul realisiert werden kann, das über eine Schnittstelle aufbereitete LVS-Ortungssignale an ein Kommunikationsendgerät überträgt, wird im Weiteren davon ausgegangen, dass das Datenerfassungsmodul zusätzlich mit einem Sendeteil ergänzt ist, so dass das so erweiterte Datenerfassungsmodul sowohl über eine Sendeantenneneinheit als auch über eine Empfangsantenneneinheit verfügt. Im Weiteren ist daher kurz die Rede von Sende- und Empfangsteil.

Handelsübliche Lawinenverschütteten-Suchgeräte enthalten einen vorstehend bezeichneten Sende- und Empfangsteil, der seinerseits über eine Sende- und Empfangsantenneneinheit verfügt, die zum Senden und Empfangen von standardisierten Lawinenverschütteten-Funksignalen, den sogenannten LVS-Ortungssignalen, ausgebildet ist. Die in Europa eingesetzten Lawinenverschütteten-Suchgeräte, kurz LVS-Gerät; arbeiten auf einer einheitlich festgelegten Frequenz, nämlich bei 457 kHz. Wie der Fachmann erkennt, können auch andere Frequenzen, als die in den folgenden Ausführungsbeispielen genannte, für LVS- Geräte inzwischen international standardisierte Frequenz von 457 kHz Verwendung finden.

Zum Auffinden Lawinenverschütteter erfolgt das Orten der ausgesandten Signale des am verschütteten Objekt befindlichen LVS- Gerätes, das sich im Sendemodus befindet, mittels wenigstens einem sich im Suchmodus befindlichen LVS- Gerät, z. B. eines nicht verschütteten Kameraden dar.

Die Geräte nach dem Stand der Technik können dabei im Wesentlichen in zwei Gruppen aufgeteilt werden.

Auf der einen Seite existieren seit wenigstens 30 Jahren in großer Zahl analoge LVS-Geräte, deren technische Ausstattung sowie Funktionsweise sich im Laufe der letzten Jahrzehnte kaum verändert hat.

Die Ortung erfolgt hierbei ausschließlich entlang des Feld-linienverlaufes des Magnetfeldes des verschütteten LVS. Bei analogen LVS- Geräten erhält der Suchende akustische Signale, d.h. je näher der Suchende am verschütteten Sender ist desto lauter das Signal (Intensitätsmodulation) und/oder desto höher die Pulsfrequenz bzw. Tonfrequenz eines ausgegebenen Ton- Pulses (Puls- und/oder Frequenzmodulation). Das Ausgabemedium ist dabei ein Piezosummer, ein Lautsprecher und/oder ein Kopfhörer in dem analogem LVS- Gerät.

In einer ersten, beispielhaften Realisierungsform der Erfin-dung stellt das Sende- und Empfangsteil für Funksignale ein kommerzielles analoges oder digitales Lawinenverschüttetensuchgerät dar. Das Kommunikationsendgerät ist als mobile, portable Einheit ausgebildet und aus der Gruppe der nachfolgenden Einheiten wählbar: Smartphone, Tablet-PC, tragbarer Computer (PDA), mobiles Navigationsgerät, digitale Armbanduhr, etc.. Das Lawinenverschüttetensuchgerät verfügt über einen Lautsprecher und das Kommunikationsendgerät über ein Mikrophon, wobei das Lawinenverschüttetensuchgerät sowie das Kommunikationsendgerät derart vorzugsweise über eine mechanische Tragstruktur lösbar fest miteinander verbunden sind, dass sich Lautsprecher und Mikrophon unmittelbar gegenüberliegen. Neben einer analogen Schnittstelle zur Daten- bzw. Signalübertragung zwischen dem Lawinenverschüttetensuchgerät und dem Kommunikationsendgerät ist selbstverständlich auch eine drahtgebundene oder drahtlose digitale Schnittstelle denkbar.

Unter dem Begriff "lösbar feste Verbindung" wird eine Fügeverbindung zwischen Sende- und Empfangsteil sowie dem Kommunikationsendteil verstanden, die eine gegenseitige raumfeste Anordnung sowie eine um wenigstens eine Achse schwenkbar gelagerte Anordnung umfasst. Denkbar ist auch eine Verbindung mittels eines beide Komponenten miteinander verbindendes flexibles Verbindungsstück, z.B. in Form einer elektrischen Leitung oder einer akustischen Schlauchleitung.

Die von dem analogen oder digitalen Lawinenverschüttetensuchgerät mittels Piezosummer bzw. Lautsprecher abgegebenen LVS-Ortungsinformationen werden von dem Mikrophon des mobilen Kommunikationsendgerätes empfangen. Zur technischen Befähigung sowohl des Empfangs über die akustische, also drahtlose Schnittstelle und der entsprechenden weiteren Verarbeitung der aufbereiteten LVS-Ortungsinformationen durch die im Kommunikationsendgerät enthaltenen Funktionseinheit bedarf es einer anwendungsspezifischen LVS- Software, die bspw. in Form einer käuflich zu erwerbenden Anwendungssoftware, einer sogenannten "App", auf das Kommunikationsendgerät geladen werden muss.

Das heute technisch veraltete, seinerzeit aber handelsübliche analoge LVS- Gerät fungiert bei diesem Ausführungsbeispiel der Erfindung in im wesentlichen unveränderter Form als vorgeschaltetes LVS- Datenerfassungsmodul für das mobile Kommunikationsendgerät. Die Wiederholfrequenz und/oder die Tonhöhe des ausgegebenen Ton- Pulses stellt die vorverarbeiteten LVS-Ortungssignale des Peilsignals dar, wobei die Weiterverarbeitung dieser LVS-Ortungssignale innerhalb der Funktionseinheit in dem Kommunikationsendgerät erfolgt. Die die über die akustische Schnittstelle übertragenen vorverarbeiteten LVS-Ortungssignale verarbeitende Funktionseinheit stellt eine Microchip basierte und Softwaregesteuerte Recheneinheit dar, die zur Generierung der Ortungsinformationen optional auch weitere Daten verarbeitet, die von wenigstens einem, ebenfalls in der Kommunikationseinheit enthaltenen Sensorsystem zur Erzeugung eines Sensorsignals herrühren, wobei das wenigstens eine Sensorsystem aus den nachfolgenden Sensortypen wählbar ist: GPS-Sensor, Beschleunigungssensor, Erdmagnetfeldsensor, Lichtsensor, Bildsensor, Temperatursensor, Kreiselkompass, Luftdrucksensor, etc.. Die derart gewonnenen Ortsinformationen werden schließlich auf wenigstens einem in der Kommunikationseinheit enthaltenen Ausgabemedium in Form eines Graphikfähigen Bildschirmes, eines Lautsprechers und/oder einer Vibrationseinheit für eine Person wahrnehmbar dargestellt. Ebenso ist es möglich das Ausgabemedium als separate Komponente auszuführen, bspw. als Kopfhörer, das über ein Kabel mit dem Kommunikationsendgerät verbunden ist. Vergleichbare als Display oder Vibrationsalarmgeber separat ausgebildete Komponenten sind in gleicher Weise denkbar.

Ein weiteres Ausführungsbeispiels sieht vor, im Falle einer akustischen Ausgabe der mittels eines LVS-Gerätes erzeugten aufbereiteten LVS-Ortungssignale über Kopfhörer, das dort anliegende elektrische Signal - ggf. nach entsprechender Anpassung an die physikalischen Erfordernisse einer drahtgebundenen, bzw. alternativ einer drahtlosen Schnittstelle des wenigstens einen mobilen Kommunikationsendgerätes direkt abzugreifen und in dem wenigstens einen mobilen Kommunikationsendgerät gemäß dem bereits dargelegten Ausführungsbeispiel weiterzuverarbeiten. So dient in diesem Fall ein entsprechend konfektioniertes Verbindungskabel zum Übertragen der aufbereiteten LVS-Ortungssignale von dem LVS-Gerät zum Kommunikationsendgerät, wobei die an den jeweiligen Geräten vorhandenen Steckerschnittstellen genutzt werden.

In den dargelegten Ausführungsbeispielen werden durch das kostengünstige Modulkonzept für das erfindungsgemäße LVS- Gesamtsystem, umfassend das LVS-Gerät und wenigstens ein Kommunikationsendgerät, die informationstechnischen Ressourcen (u.a. Rechenleistung, Ausgabemedien, Sensorik) in dem wenigstens einen mobilen Kommunikationsendgerät für das LVS- Gerät verfügbar gemacht. So sei angenommen, dass ein analoges LVS- Gerät sowie bspw. ein Smartphone ohnehin vorhanden sind, so dass lediglich noch eine kostengünstig realisierbare Software bspw. in Form eines "Apps" für das mobile Smartphone benötigt wird.

Ein besonderen Vorteil des erfindungsgemäßen Modulkonzepts ist, dass weitere Informationen für die Ermittlung der wahrscheinlichen Lage eines oder mehrerer verschütteter Objekte von dem wenigstens einen mobilen Kommunikationsend-gerät bereitgestellt werden, das üblicherweise ohnehin vorhanden ist und für das keine zusätzlichen Anschaffungskosten anfallen.

Zunehmend gibt es digitale LVS- Geräte, bei denen man anhand der im Gerät vorgesehenen Anzeige von Richtungs- und teilweise auch von Distanzangaben entlang des magnetischen Feldes zum verschütteten LVS-Gerät gelotst wird. Digitale LVS-Geräte der neuesten Generation verfügen über zusätzliche Ausstattung wie z. B. grafische Displays sowie Zusatz-Funktionalitäten wie z.B. die Möglichkeit zur Mehrfachverschüttetenortung durch Markier-funktion oder die Nachlawinenumschaltung. Neben dem Funktionsumfang erweitern manche der modernen LVS-Geräte auch die Such-Technologie, indem sie neben dem Magnetfeld auch auf die Raumvektor-Triangulation mittels GPS zurück greifen. Aufgrund der zusätzlich eingebauten Technik erreichen moderne LVS-Geräte eine höhere Genauigkeit bei der Ortung und Verkürzen damit die Suchdauer.

Derzeit auf dem Markt erhältliche mobile Kommunikationsendgeräte im Sinne von smartphones, PDAs, Tablet PCS, Notebooks etc. können im Originalzustand weder den Such- noch den Sendemodus von LVS-Geräten übernehmen. Die Ausstattung von handelsüblichen smartphones weist jedoch wenigstens teilweise nützliche Sensorik für eine derartige Positionsbestimmung auf. Besonders Empfänger und Signalverarbeitungsmittel zur Aufbereitung von Signalen der Satellitennavigation, z. B. dem in Betrieb befindlichen "global positioning system - GPS, gehören zunehmend zur Grundausstattung derartiger Geräte. Aber auch Beschleunigungssensoren, Kreiselkompasse, Luftdrucksensoren, etc. werden zunehmend- zum Zwecke der absoluten Positions- und/oder relativen Lagebestimmung integriert.

Ein großer Vorteil heutiger mobiler Kommunikationsendgeräte besteht darin, dass sie dem Anwender aufgrund ihrer Internet-fähigkeit zahlreiche Zusatzfunktionen und Informationsmöglich-keiten bieten, z.B. das Abrufen von lokal selektierten Informationen über das Wetter, die Umgegend, die Topographien zu einen Skigebiet, etc. Da die mobilen Kommunikationsendgeräte als Massenartikel darüber hinaus kostengünstig erworben werden können, weisen sie bereits jetzt eine große Verbreitung sowie hohe Wachstumsraten auf.

Eine bekannte Möglichkeit zur Ortung von verschütteten Objekten stellt die Vorrichtung zur Ortung von Objekten oder Personen, insbesondere für eine Lawinenverschüttetensuche sowie Verfahren zur Ortung gemäß der Offenlegungsschrift EP 2 065 722 A1 dar. Hierbei wird an verschiedenen Messpunkten die Feldrichtung und -stärke der empfangenen magnetischen Feldkomponente gemessen. Über eine Software kann man den Ursprung des detektierten Signals und damit die Position über Entfernung, Richtung und Tiefe der verschütteten LVS- Geräte ermitteln. Die unmittelbare Umsetzung dieser Lehre in Form eines eigenständigen Gerätes erfordert Spezial-Hardware sowie kostenintensive Elektronikkomponenten, insbesondere zur Bereitstellung der Rechenleistung und der Ausgabefunktionalität über ein geeignetes graphikfähiges Display und ist hauptsächlich für den professionellen Einsatz, z.B. Bergwacht, sinnvoll.

Anders dagegen ist die Umsetzung dieses bekannten Ortungsverfahrens im Lichte der hier offenbarten Erfindung zu sehen. Die noch erforderliche Spezialhardware reduziert sich in vorteilhafter Weise im Wesentlichen auf einen Sende- und Empfangsteil mit jeweils vorzugsweise drei orthogonal zueinander angeordneten Ferritstab- Antennen, ggf. als Teil von wenigstens einem Resonanzkreis, zur Detektion der Richtungskomponenten des empfangenen magnetischen Feldes in drei unterschiedlichen, nicht kollinearen Raumrichtungen. Zudem ist in dem Sende- und Empfangsteil die Signalwandlereinheit als relativ einfaches und kostengünstiges Mittel zur Digitalisierung, ggf. nach vorheriger hinreichender Signalverstärkung, der LVS-Ortungssignale zum Zwecke der Übertragung über eine drahtlose oder drahtgebundene Schnittstelle zu dem wenigstens einen mobilen Kommunikationsendgerät vorgesehen.

Mobile Kommunikationsendgeräte wie smartphones, Tablet PCs, PDAs, Notebooks etc. verfügen über mindestens einen leistungsfähigen Prozessor, der die vielschichtigen Mensch- Maschine Schnittstellen derartiger mobiler Kommunikationsmittel steuert und überwacht.

Wesentliche Funktionalitäten derartiger mobiler Kommunikationsendgeräte betreffen insbesondere:
- den Aufbau, dem Betrieb und dem Abbau von Kommunikationskanälen insbesondere in mobile zellulare Netze (WLAN, GSM, UMTS),
- die Eingabe (über Tastatur, Touchscreen, Mikrophon, etc.) von Daten im allgemeinem Sinn,
- die Ausgabe von Daten über Display, Lautsprecher, Vibrationsalarm, etc.,
- das Energiemanagement, insbesondere die Anpassung der Sendeleistung des mobilen Kommunikationsendgerätes in Abhängigkeit von den momentanen Gegebenheiten in der belegten Funkzelle, Laderegelung des eingebauten Akkus

Darüber hinaus bestehen standardisierte Freiräume, um anwenderspezifische Software (u. a. sog. Apps) auf dem Betriebssystem des mobilen Kommunikationsendgerätes laufen zu lassen.

Eben diese bereits vorhandenen hardware- und software- technischen Eigenschaften moderner Kommunikationsendgeräte macht sich das lösungsgemäße Ortungssystem zunutze, um die vielseitige Funktionalität moderner Kommunikationsendgeräte um die Funktion der Lawinenverschütteten-Ortung, stellvertretend für alle erdenklich vergleichbaren Ortungsaufgaben, zu erweitern.

So können jegliche Informationen, die zur Berechnung bzw. Ermittelung der Lage eines oder mehrerer Lawinenverschütteter geeignet sind, herangezogen werden, bspw. mittels Sensoren zur GPS-Positionsermittlung, Beschleunigungssensor, Richtungssensor (Kompass), Luftdrucksensor, CCD- Kamera, etc., die sich ohnehin in dem wenigstens einen mobilen Kommunikationsendgerät enthalten sind.

Über spezifisch entwickelte Auswertesoftware, die als auf dem Betriebssystem des wenigstens einen mobilen Kommunikationsendgerätes laufendes Programm implementiert ist, werden die Daten aus den verwendeten Sensoren konsolidiert und das Ergebnis hinsichtlich der wahrscheinlichen Position des bzw. der Verschütteten über das smartphone- Display benutzergerecht dargestellt.

Wie vorstehend erläutert kann als Sende- und Empfangsteil zum Senden und Empfangen der standardisierten LVS-Ortungssignale ein konventionelles und im Handel erhältliches LVS-Gerät verwendet werden. Der Sende- und Empfangsteil kann jedoch auch in Form eines speziell an das jeweilige Kommunikationsendgerät spezifisch angepasstes Zusatzmodul ausgebildet sein, das als kostengünstiges, separates Zusatzmodul zu dem jeweiligen Kommunikationsendgerät angeboten werden kann. Da sowohl das modulartige Sende- und Empfangsteil als auch das Kommunikationsendgerät jeweils als separate Baueinheiten ausgebildet und jeweils von einem eigenen Gehäuse umfasst sind, gilt es beide Gehäuse in einer festen räumlichen Zuordnung zueinander zu positionieren. Insbesondere infolge der Konsolidierung von Positions- bzw. Lagedaten aus dem Sende- und Empfangsteil sowie dem damit zusammenwirkenden mobilen Kommunikationsendgerät ist eine feste räumliche Zuordnung der beiden Systemkomponenten zur Sicherstellung einer weitgehenden Datenkonsistenz vorteilhaft wenn nicht gar notwendig, z. B dahingehend, dass die Information z.B. über die Beschleunigung, stammend aus dem mobilen Kommunikationsendgerät, "zusammenpasst" mit der Information aus dem Ortungssignal, stammend von Sensoren in dem Sende- und Empfangsteil. Dies ist bspw. mit Hilfe einer mechanischen Verbindungsstruktur möglich, die das Sende- und Empfangsteil und das Kommunikationsendgerät starr oder zumindest um wenigstens eine Raumachse schwenkbar fest miteinander verbindet.

Eine mögliche Ausgestaltungsform ist bspw. eine Brieftaschen-artige Hülle, die über zwei, über eine Faltkante zusammenhängende Hüllentaschen verfügt, jeweils zur Aufnahme einer Komponente. So kommen der Sende- und Empfangsteil sowie das Kommunikationsendgerät im zusammengeklappten Zustand der Brieftaschen-artigen Hülle unmittelbar aufeinander zu liegen. Selbstverständlich sind auch mechanisch starre Tragstrukturen für ein raumnahes Aneinanderfügen des Sende- und Empfangsteils sowie des Kommunikationsendgeräts denkbar.

Auch eignet sich für ein beide Komponenten verbindendes Mittel ein entsprechend ausgebildetes Steckverbindungssystem, das eine lösbar feste Fügeverbindung zwischen dem Sende- und Empfangsteil und dem Kommunikationsendgerät ermöglicht. In alternativer Weise kann die Komponentenfügung auch als auf magnetischen Anziehungskräften beruhenden Verbindungsmechanismus ausgebildet sein, der das Sende- und Empfangsteil und das Kommunikationsendgerät lösbar fest miteinander verbindet.

Mit einer derartigen modularen Ergänzung werden marktübliche mobile Kommunikationsendgeräte, die insbesondere auch bei Wintersportlern sehr verbreitet sind, dazu befähigt, auch als LVS- Gerät tauglich zu sein.

Insbesondere zeichnet sich das als separate Moduleinheit ausgebildete Datenerfassungsmodul mit einem Empfangsteil, das eine Empfangsantenneneinheit zum Empfangen von standardisierten Lawinenverschütteten-Funksignalen, kurz LVS-Ortungssignalen, umfasst sowie mit einem Mittel zur Aufbereitung der empfangenen LVS-Ortungssignale, und eine elektrische Energieversorgungseinheit vorsieht, dadurch aus, dass das Datenerfassungsmodul eine standardisierte Schnittstelle zumindest zum drahtgebundenen oder drahtlosen Aussenden der aufbereiteten LVS-Ortungssignale aufweist.

Das als separates Zusatzmodul ausgebildete Datenerfassungsmodul weist vorzugsweise eine als USB-, BlueTooth- oder WLAN-Schnittstelle oder NFC-Schnittstelle ausgebildet Schnittstelle auf, über die eine gesicherte Datenübertragung zumindest von dem Datenerfassungsmodul zum Kommunikationsendgerät ermöglich wird. Selbstverständlich kann die Schnittstelle auch zu einer bidirektionalen Datenübertragung befähigt sein sein, bspw. zu Zwecken eines Datenabgleiches.

Wie bereits vorstehend erläutert weist das modulartige Datenerfassungsmodul in besonders vorteilhafter Weise einen Sendeteil auf, mit dem auch das Absenden von LVS-Signalen möglich ist. Im Weiteren ist daher die Rede von Sende- und Empfangsteil sowie von Sende- und Empfangsantenneneinheit.

Das als separate Moduleinheit ausgebildete Sende- und Empfangsteil kann mit technisch geringem Aufwand in Bezug auf Einzelkomponenten und Kosten realisiert werden, zumal die "LVS"-Moduleinheit kein eigenständig funktionsfähiges und bedienbares Bauteil darstellen soll, sondern lediglich in Verbindung mit dem Kommunikationsendgerät, das als Ein- und Ausgabegerät, d.h. als das eigentliche Bediengerät dient, eine technische Funktionseinheit darstellt.

Für die Ausbildung der Schnittstelle zur Übertragung der in dem Sende- und Empfangsteil empfangenen und aufbereiteten Informationssignale an das Kommunikationsendgerät stehen grundsätzlich zwei alternative Verbindungstechniken zu Verfügung.

### A. Leitungsgebundene Signal-Übertragung von dem Sende- und Empfangteil, bspw. mittels USB- Schnittstelle, zu dem wenigstens einen mobilen

Kommunikationsendgerät, vorzugsweise als serieller binärer Datenstrom mit geeignetem Spannungspegel. Optional besteht bei der Nutzung einer derartigen USB- Schnittstelle zusätzlich die Möglichkeit der Energieversorgung Sende- und Empfangsteils aus der Energiequelle des wenigstens einen mobilen Kommunikationsendgerätes. Aber auch umgekehrt kann eine im Sende- und Empfangsteil vorhandene Energiequelle dazu herangezogen werden, das wenigstens eine mobile Kommunikationsendgerät mit Energie zu versorgen, wenn dessen Energiequelle selbst erschöpft ist.

B. Drahtlose Übertragung per Funk von dem Sende- und Empfangsteil, z.B.: mittels BlueTooth- oder WLAN- Schnittstelle, zu dem wenigstens einen mobilen Kommunikationsendgerät, vorzugsweise als serieller binärer Datenstrom mit geeignetem Logikpegel.

Die drahtlose Übertragung kann auch in Form einer akustischen Übertragung erfolgen, bspw. über den beim Sende- und Empfangsteil vorhandenen Lautsprecher, Piezopiepser oder Kopfhörer einerseits und über das Mikrophon in dem wenigstens einen mobilen Kommunikationsendgerätes andererseits, wobei bei der in dem wenigstens einen mobilen Kommunikationsendgerät erfolgende Digitalisierung vorzugsweise ein binärer Datenstrom erzeugt wird. Niederfrequenz- (NF) und/oder Zwischenfrequenz- (ZF) Signale könnten auch per Draht von z. B. von Kopfhörerausgang eines als vorschaltbares Datenerfassungsmodul wirkendes analog arbeitendes LVS- Gerät zum z. B. Mikrofoneingang des smartphones übermittelt werden.

Anwendungsspezifische Software wird zu Seiten des Sende- und Empfangsteil, wenn überhaupt, nur in sehr geringem Umfang benötigt. Die Erfindung zielt in Form bevorzugter Ausführungsformen gerade darauf ab, die Ressourcen in mobilen Kommunikationsendgeräten, durch eine vorteilhafte und kostengünstige Hardwareergänzung - in Form eines vorgeschalteten LVS- Datenerfassungsmoduls - möglichst umfassend für die LVS- Funktionalität zu erschließen und somit in diesem Umfang Doppelstrukturen und damit Doppelinvestitionen zu vermeiden.

Die für das Gesamtsystem notwendige Software läuft praktisch überwiegend auf dem Betriebssystem des wenigstens einen mobilen Kommunikationsendgerätes. Die Gestehungskosten dieser Softwarekomponente sind sehr gering, wodurch sich das vorgeschaltete Sende- und Empfangteil samt Softwarepaket, z. B. für ein mobiles Kommunikationsendgerät eines bestimmten Fabrikats, günstig angeboten werden kann.

In einer weiteren Ausführungsform verfügt das Datenerfassungsmodul, das entweder nur als Empfangsteil oder als Sende- und Empfangsteil ausgebildet sein, über wenigstens ein Ausgabemedium, bspw. in Form eines Displays, Lautsprechers oder eines Vibrationsalarmgeber, über das die aufbereiteten LVS-Ortungssignale für eine Person wahrnehmbar, d.h. sichtbar, hörbar oder fühlbar darstellbar sind.

Lösungsgemäß zeichnet sich zudem ein Verfahren zur Ortung einer Lawinenverschütteten-Funksignale, kurz LVS-Ortungssignale, aussendenden Einheit unter Verwendung eines vorstehend erläuterten Ortungssystems dadurch aus, dass die LVS-Ortungssignale von dem Datenerfassungsmodul erfasst und aufbereitet werden, die in Form von aufbereiteten LVS-Ortungssignalen über eine standardisierte Schnittstelle zu dem Kommunikationsendgerät übertragen werden, in dem unter Zugrundelegung der aufbereiteten LVS-Ortungssignale Ortungsinformationen generiert werden, die auf wenigstens Ausgabemedium optisch, akustisch und/oder haptisch wahrnehmbar dargestellt werden.

In vorteilhafter Weise generiert dabei das Kommunikationsendgerät mit Hilfe wenigstens eines im Kommunikationsendgerät integrierten Sensorsystems wenigstens eine der nachfolgenden Informationen: geographische Position des Kommunikationsendgerätes, Luftdruck und/ Temperatur am Ort des Kommunikationsendgerätes, eine am Kommunikationsendgerät wirkende Beschleunigung, Erdmagnetfeld am Ort des Kommunikationsendgerätes. Ebendiese Informationen oder zumindest ein Teil dieser Informationen werden zur Generierung der Ortungsinformationen neben der vom Datenerfassungsmodul übertragenen Informationssignalen zugrunde gelegt wird.

Um das Kommunikationsendgerät zur Kommunikation mit dem Datenerfassungsmodul sowie zur Signalverarbeitung zu Zwecken der Ortung zu befähigen, bedarf es eines Computerprogramms das einen Programmcode zur Durchführung des vorstehend erläuterten Verfahrens enthält. Dabei wird der Programmcode auf der die übertragenen, aufbereiteten LVS-Ortungssignale verarbeitenden Funktionseinheit, die als Microchip basierte Rechnereinheit innerhalb des Kommunikationsendgerätes ausgebildet ist, ausgeführt. Typischerweise kann der Programmcode als Applikationsprogramm, d.h. als "App", temporär oder dauerhaft in der im Kommunikationsendgerät enthaltenen Rechnereinheit abgespeichert werden.

Mit Hilfe eines derartigen Programmcodes ist es überdies möglich die technische Funktionalität einzelner Hardwarekomponenten des Gesamtsystems gezielt zu aktivieren sowie auch zu deaktivieren. Beispielsweise ist es aufgrund möglicher HF-Querempfindlichkeiten Seitens des als LVS-Gerät ausgebildeten Datenerfassungsmoduls vorteilhaft, wenn nicht gar erforderlich, eine im Kommunikationsendgerät enthaltene Mobilfunktelefonfunktion, wie sie in Smartphones enthalten ist, auszuschalten, wie dies bei den meisten derartiger Smartphones durch die "Flug-Modus"-Funktion ohnehin realisiert ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig.1:: ein mobiles Kommunikationsendgerät (in allen Fig. mit Smartphone* bezeichnet) mit LVS-Zusatzausstattung,
- Fig. 2:: ein einem mobilen Kommunikationsendgerät vorschaltbares Sende- und Empfangsteil mit drahtloser Schnittstelle zum mobilen Kommunikationsendgerät,
- Fig. 3:: ein einem mobilen Kommunikationsendgerät vorschaltbares Sende- und Empfangsteil und mit drahtgebundener Schnittstelle zum mobilen Kommunikationsendgerät
- Fig. 4:: ein einem mobilen Kommunikationsendgerät vorschaltbares Sende- und Empfangsteil mit akustischer Schnittstelle zum mobilen Kommunikationsendgerät und
- Fig. 5:: einem mobilen Kommunikationsendgerät vorschaltbares Datenerfassungsmodul mit akustischer Schnittstelle zum mobilen Kommunikationsendgerät sowie einer festen räumlichen Zuordnung von vorschaltbarem Datenerfassungsmodul und mobilem Kommunikationsendgerät

### Wege zur Ausführung der Erfindung, gewerbliche Verwendbarkeit

Gegenstand der Erfindung ist also ein Ortungssystem zur Ortung insbesondere von Lawinenverschütteten unter Nutzung eines mobilen Kommunikationsendgerätes 1, das mit einem vorgeschaltetem Sende und Empfangsteil 2 für Ortungssignale (LVS-Erfassungsmodul) insbesondere zum Auffinden von Lawinenverschütteten in Wirkverbindung steht.

Das Kommunikationsendgerät 1 ist z. B. ein smartphone, PDA, Tablet PC oder Notebook und dient vorzugsweise als Datenaufbereitungsmodul, Anzeigemodul aber auch als ein Ergänzungsmodul zur Erfassung von Messwerten über Lage, Beschleunigung, Luftdruck, Position, (des mobilen Kommunikationsendgerätes) etc.. Das Kommunikationsendgerät 1 weist vorzugsweise ein GSM-System 3, eine Funktionseinheit 4 in Form wenigstens eines Prozessors, der zudem mit Sensoren in Datenaustausch steht, ein Energiemanagement-System 5 sowie eine Speichereinheit 6 auf. Das als Zusatzausstattung aufzufassende Datenerfassungsmodul 2 weist einen Sende- und Empfangsteil 7 auf, der jeweils wenigstens über eine Sende- und Empfangsantenneneinheit zum Senden und Empfangen von LVS-Ortungssignalen mit einer Frequenz von 457 kHz sowie ein Mittel 8 zur Aufbereitung der LVS-Ortungssignale, in dem die empfangenen LVS-Signale vorzugsweise verstärkt und Analog/Digital gewandelt werden. Vorzugsweise kann das Datenerfassungsmodul 2 über zusätzliche Sensorik verfügen, wie bspw. einen Luftdruckdrucksensor.

Mit einer derartigen modularen Kombination gelingt die Realisierung eines kostengünstigen LVS- Gerätes mit zumindest marktüblichen Funktionalitäten.

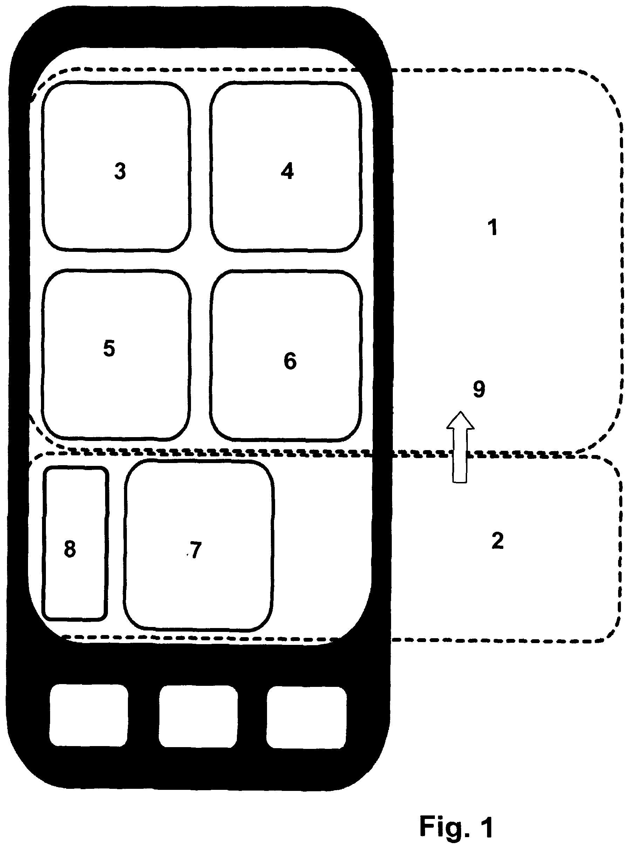

Dieses erste Ausführungsbeispiel gemäß Fig. 1 bezieht sich im Speziellen auf den modularen Einbau des Datenerfassungsmoduls 2 bereits bei der Herstellung des mobilen Kommunikationsendgerätes, im Folgenden smartphone genannt, schließt aber auch den nachträglichen modularen Einbau der für die LVS- Funktionalität notwendigen Komponenten mit ein. Das modulare Zusatzmodul kann in Art einer Einsteckkarte in einen extra im Kommunikationsendgerät ausgebildeten Einsteckschacht eingebracht werden oder in eine ähnliche Aufnahmemöglichkeit in das Kommunikationsendgerät implementierbar integriert werden.

Durch ein einem derartigen mobilen Kommunikationsendgerät 1 (in Signalflussrichtung gesehen) vorgeschaltetes LVS-Sende- und Empfangsteil als Datenerfassungsmodul 2 werden LVS- spezifische Signale bei der Lawinenverschüttetensuche, insbesondere die Feldstärke und bei bevorzugten Ausführungsformen auch mehrere Komponenten der Feldrichtung des Magnetfeldes der verwendeten 457 kHz- Signale, in bevorzugter Weise verstärkten, ansonsten aber weitgehend unverarbeitet, bevorzugter Weise für eine Übertragung über eine (standardisierte) Schnittstelle 9 des mobilen Kommunikationsendgerätes 1, drahtgebunden z. B. USB, drahtlos z. B. BlueTooth, akustisch z. B. über Mikrophon - im Sinne eines Akustikkopplers) zum Zwecke der Weiterverarbeitung in aufbereiteten Form zur Verfügung gestellt.

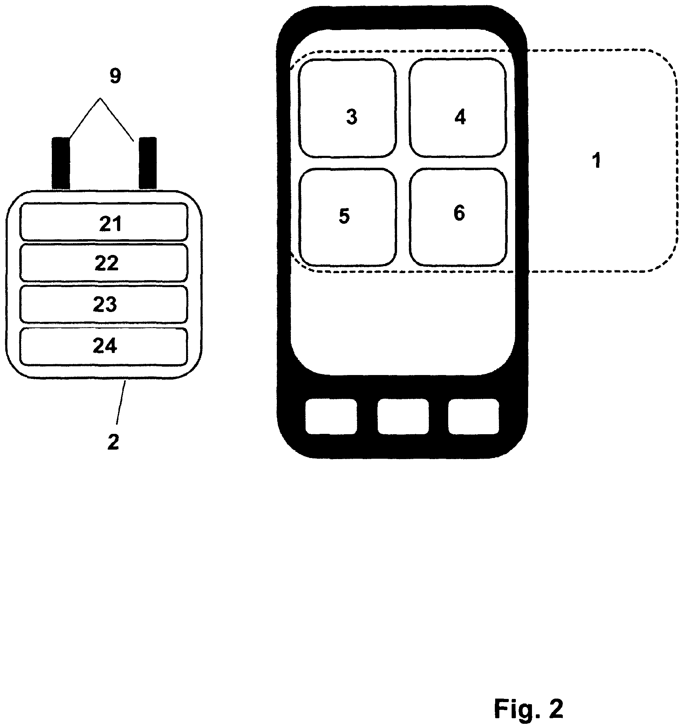

In Figur 2 ist das Datenerfassungsmodul 2 als separates Zusatzmodul mit einem eigenständigen Gehäuse ausgebildet, vergleichbar mit dem Gehäuse für einen Zusatzakku, oder in eine mit Elektronik ausgestattete Schutzhülle für das smartphone 1, untergebracht. Das Datenerfassungsmodul 2 enthält in dem gezeigten Ausführungsbeispiel als Mittel zur Aufbereitung der empfangenen LVS-Ortungssignale einen A/D-Wandler 21, als Sende und Empfangsteil eine 457 kHz Sende- und Empfangantenne 22, eine zusätzliche Sensorik 23 sowie eine Batterieeinheit 24.

In Kombination mit einem smartphone 1 dient das als modulare Zusatzeinheit ausgebildete Datenerfassungsmodul 2 sowohl als LVS- Sender als auch als LVS-Suchgerät. Dazu müssen die beiden Einheiten (mobiles Kommunikationsendgerät und Datenerfassungsmodul) in der Lage sein, Daten auszutauschen.

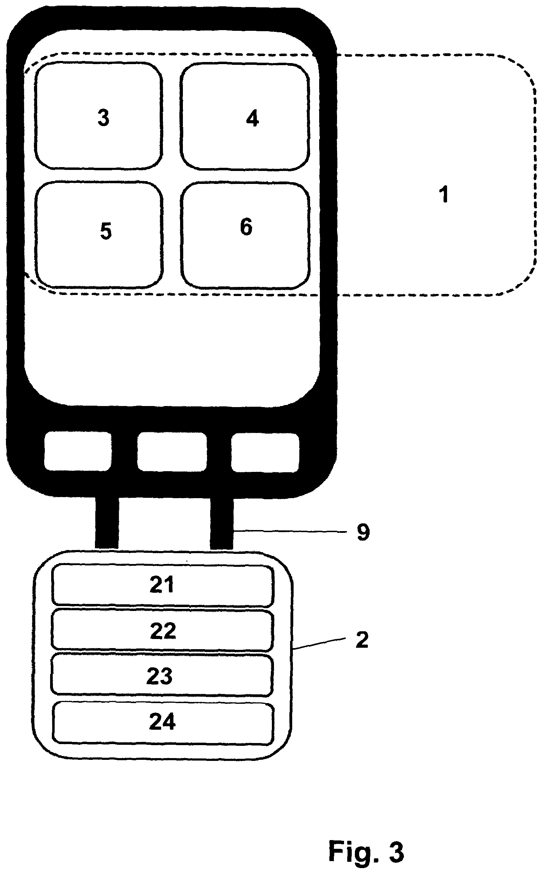

Der Datenaustausch kann drahtlos, z.B. eine BlueTooth- oder WLAN-Schnittstelle 9 (siehe Fig. 2) oder drahtgebunden (z.B. USB - siehe auch Fig. 3) über vorhandene Schnittstellen erfolgen.

Durch das modulare Datenerfassungsmodul 2 können die Komponenten und damit Kosten und Größe für ein handhabbares LVS- Gerät deutlich reduziert und die Möglichkeit für Zusatzfunktionen zugleich deutlich erhöht werden.

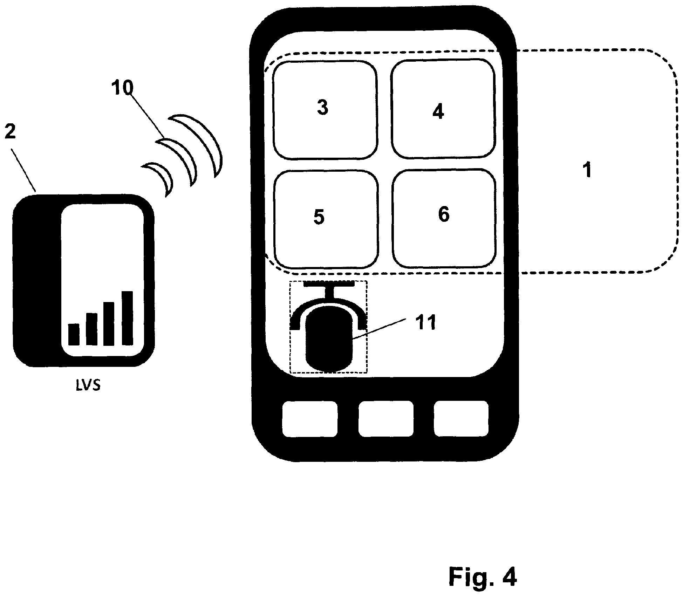

Bei einem in Figur 4 illustrierten Ausführungsbeispiel ist das Datenerfassungsmodul 2 als konventionelles analoges oder digitales LVS-Gerät ausgebildet, dessen von einem nicht dargestellten Lautsprecher abgegebene Akustiksignale 10 über das Mikrofon 11 des mobilen Kommunikationsendgerätes 1 aufgenommen und digitalisiert werden. Die Signale können auch über eine drahtgebundene Verbindung z. B. von der Kopfhörer- zur Mikrofonbuchse gelangen. In Figur 4 sind das LVS-Datenerfassungsmodul 2 und das Kommunikationsendgerät 1 getrennt voneinander handhabar und angeordnet.

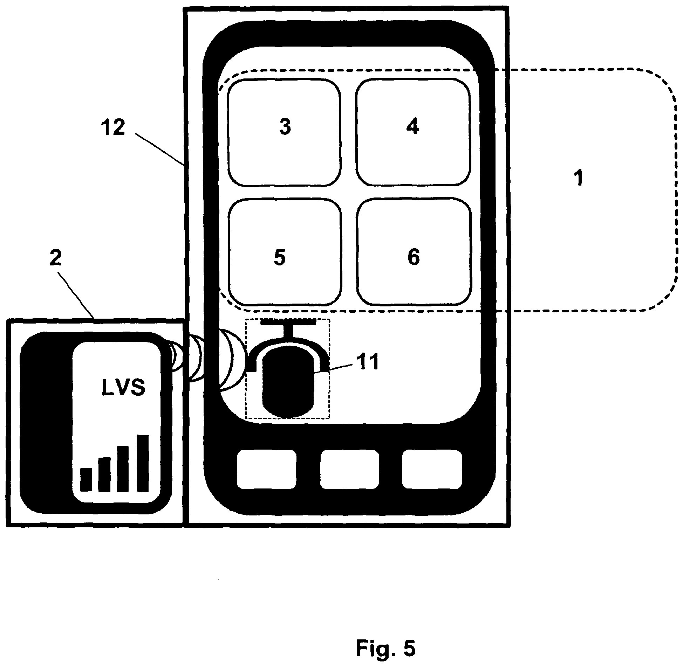

Das Datenerfassungsmodul 2 ist mit dem Kommunikationsendgerät 1 in einer bevorzugten Ausführungsform möglichst zu einer gemeinsamen einzigen handhabbaren Einheit 12 zu fügen, wie dies in Figur 5 dargestellt ist. Die dafür notwendige (räumliche) Kopplung ist in vielen Ausprägungen denkbar, z. B. in Form einer entsprechenden Schutzhülle, die alle Systemkomponenten aufnimmt, so dass der Nutzer nur einen Gegenstand bzw. ein Gerät in Händen hält. Durch die Gerätekombination wird es dem Wintersportler ermöglicht, die zeitaufwendige Suche mit einem analogen LVS- Gerät abzukürzen, indem er auf die optimierten Suchalgorithmen sowie auf die verbesserten Anzeigemöglichkeiten des mobilen Kommunikationsendgerätes zurückgreifen kann.

Die Notwenigkeit einer festen räumlichen Zuordnung beider Systemkomponenten, also dem vorschaltbaren Datenerfassungsmodul 2 sowie dem mobilen Kommunikationsendgerät 1, ergibt sich aus den Vorteilen der Koinzidenz und Konsistenz der Ortungsdaten aus LVS- Sensoren sowie der GPS- Daten, Bewegungsdaten aus Bewegungssensoren, etc. im mobilen Kommunikationsendgerät 1. Zudem entsteht so der Vorteil für den Nutzer einer einfachen leichten Handhabung des Ortungssystems.

Die Verbindung kann mittels mechanischer und elektrischer Steckverbindung sowie im Wege eines Magnetmechanismus realisiert werden, vergleichbar der Schutzdeckelbefestigung bei bekannten Tablet-PCs.

Die in Figur 4 und 5 illustrierte Schnittstelle zwischen Datenerfassungsmodul 2 und Kommunikationsendgerät 1 mittels Akustikkoppler ermöglicht es, mittels einer "smartphone-App" ohne dem zusätzlichen Erwerb von Hardware ein eigentlich veraltetes analoges LVS-Gerät mit modernen Leistungsmerkmalen zu ergänzen und so die Suchmöglichkeiten deutlich zu verbessern. Dies kann sowohl die Genauigkeit, als auch die Bedien- und Nutzbarkeit verbessern.

Eine Variante sieht vor die Signale aus dem Kopfhörerausgang des analogen LVS-Geräts mittels eines "Komparators" (entsprechend einem Analog/Digital- Wandler) aufzubereiten bzw. zu digitalisieren und so drahtgebunden über eine USB-Schnittstelle in das mobile Kommunikationsendgerät zu überführen.

Das System kann auch um weitere Funktionen erweitert werden. In diesem Zusammenhang sei beispielhaft auf die Möglichkeit einer automatischen Alarmauslösung hingewiesen. Unterliegt der Wintersportler z.B. einer zu starken Beschleunigung, kann dies über Beschleunigungssensoren (in modernen smartphones bereits verfügbar) festgestellt werden. Das System alarmiert daraufhin automatisch eine zuvor hinterlegte Stelle.

Die Anbindung des vorschaltbaren Datenerfassungsmoduls (drahtgebunden) ermöglicht darüber hinaus auch die Anbindung eines weiteren Akkus ("Reservebatterie" 24 ) und damit eine längere Energieversorgung bzw. eine längere Verfügbarkeit des LVS- Gerätes im Sende- und/oder Empfangsmodus. Hierbei ist im Falle eines Energieengpasses sowohl der Zugriff des smartphones auf den zusätzlichen Akku des vorschaltbaren Sende und Empfangsteils als auch der entgegengesetzte Versorgungsweg möglich.

Moderne mobile Kommunikationsendgeräte verfügen über eine erhebliche Rechenleistung, die für nutzerspezifische Applikationen verfügbar ist (sog. Apps) und darüber hinaus über eine ganze Reihe von eingebauter Sensorik, die - in Verbindung mit der verfügbaren Rechenleistung - für die Lösung der Aufgabe der Lawinenverschüttetensuche in vorteilhafter Weise mit verwendet werden können.

Auf diese Weise erübrigt sich der Aufwand für die entsprechenden Signalverarbeitungs- und Ausgabekomponenten in einem für sich eigenständigen LVS- Gerät selbst.

Das vorgeschaltete Datenerfassungsmodul (LVS- spezifisches Signalvorverarbeitungsmodul) wird vom Aufbau her wesentlich einfacher, verbraucht weniger Energie und vermeidet letztendlich Doppelstrukturen (z. B. einen digitalen Signalprozessor DSP, ein Display).

### Bezugszeichenliste

- 1: Kommunikationsendgerät
- 2: Datenerfassungsmodul
- 21: A/D-Wandler, Signalwandlereinheit
- 22: 457 kHz- Antenne
- 23: Sensorik
- 24: Reserveakku
- 3: GSM-System
- 4: Funktionseinheit mit Sensorik
- 5: Energiemanagement-System
- 6: Speichereinheit
- 7: Sende- und Empfangsteil
- 8: Mittel zur Aufbereitung der LVS-Ortungssignale
- 9: Drahtlose/ drahtgebundene Schnittstelle
- 10: Akustiksignale
- 11: Mikrophon
- 12: Handhabbare Einheit

## Patentansprüche

1. Ortungssytem zur Lawinenverschüttetensuche zumindest mit einem Datenerfassungsmodul für Funksignale sowie mit einem mobilen Kommunikationsendgerät, **dadurch gekennzeichnet,**
- **dass** das Datenerfassungsmodul und das Kommunikationsendgerät jeweils als separate Baueinheiten ausgebildet sind, die jeweils von einem eigenen Gehäuse umfasst sind,
- **dass** das Datenerfassungsmodul einen Empfangteil mit einer Empfangsantenneneinheit umfasst, die zum Empfangen von standardisierten Lawinenverschütteten-Funksignalen, kurz LVS-Ortungssignalen, ausgebildet ist,
- **dass** das Datenerfassungsmodul Mittel zur Aufbereitung der empfangenen LVS-Ortungssignale vorsieht,
- **dass** das Datenerfassungsmodul eine Schnittstelle zur drahtgebundenen oder drahtlosen Übertragung der aufbereiteten LVS-Ortungssignale zu dem Kommunikationsendgerät vorsieht,
- **dass** das Kommunikationsendgerät ein die übertragenen, aufbereiteten LVS-Ortungssignale verarbeitendes Mittel, im Weiteren als Funktionseinheit bezeichnet, enthält, das Daten zum Auffinden, kurz Ortungsinformationen generiert, und
**dass** wenigstens ein Ausgabemedium vorgesehen ist, das die Ortsinformationen wahrnehmbar darstellt.

2. Ortungssystem nach Anspruch 1,
**dadurch gekennzeichnet, dass** wenigstens ein Mittel vorgesehen ist, das das Datenerfassungsmodul mit dem Kommunikationsendgerät lösbar fest miteinander verbindet.

3. Ortungssystem nach Anspruch 1 oder 2,
**dadurch gekennzeichnet, dass** das Datenerfassungsmodul neben dem Empfangsteil einen Sendeteil mit einer Sendeantenneneinheit zum Senden von standardisierten Lawinenverschütteten-Funksignalen, kurz LVS-Ortungssignalen, umfasst, das zu einem Sende- und Empfangsteil zusammengefasst ist.

4. Ortungssystem nach Anspruch 2 oder 3,
**dadurch gekennzeichnet, dass** das wenigstens eine Mittel in Form einer mechanischen Verbindungsstruktur ausgebildet ist, die das Datenerfassungsmodul und das Kommunikationsendgerät starr, zumindest um wenigstens eine Raumachse schwenkbar oder über eine flexible Verbindungsstruktur miteinander verbindet.

5. Ortungssystem nach einem der Ansprüche 1 bis 4,
**dadurch gekennzeichnet, dass** die die übertragenen, aufbereiteten LVS-Ortungssignale verarbeitende Funktionseinheit eine Microchip basierte und Softwaregesteuerte Recheneinheit ist, und dass das Kommunikationsendgerät eine elektrische Energiespeichereinheit aufweist und
dass das Kommunikationsendgerät wenigstens ein Sensorsystem zur Erzeugung eines Sensorsignals enthält, das der Recheneinheit zur Generierung der Ortungsinformationen zuführbar ist, wobei das wenigstens eine Sensorsystem aus den nachfolgenden Sensortypen wählbar ist: GPS-Sensor, Beschleunigungssensor, Erdmagnetfeldsensor, Lichtsensor, Bildsensor, Temperatursensor, Kreiselkompass Luftdrucksensor.

6. Ortungssystem nach einem der Ansprüche 1 bis 5,
**dadurch gekennzeichnet, dass** das wenigstens eine Ausgabemedium in Form eines Displays, eines Lautsprechers und/oder einer Vibrationseinheit ausgebildet ist, und
dass das wenigstens eine Ausgabemedium in dem Kommunikationsendgerät integriert oder als separate Komponente ausgebildet ist, die über eine drahtgebundene oder drahtlose Schnittstelle mit dem Kommunikationsendgerät in Datenaustausch steht.

7. Ortungssystem nach einem der Ansprüche 3 bis 6,
**dadurch gekennzeichnet, dass** das Sende- und Empfangsteil für Funksignale ein kommerzielles analoges oder digitales Lawinenverschüttetensuchgerät ist, und dass das Lawinenverschüttetensuchgerät über einen Lautsprecher und das Kommunikationsendgerät über ein Mikrophon verfügen, und dass das Mittel als mechanische Tragstruktur ausgebildet ist, in die das Sende- und Empfangsteil sowie das Kommunikationsendgerät derart befestigbar sind, dass sich Lautsprecher und Mikrophon unmittelbar gegenüberliegen.

8. Verfahren zur Ortung einer standardisierte Lawinenverschütteten-Funksignale, kurz LVS-Ortungssignale, aussendenden Einheit unter Verwendung eines Ortungssystems nach einem der Ansprüche 1 bis 7, **dadurch gekennzeichnet, dass** die LVS-Ortungssignale von dem Datenerfassungsmodul erfasst und aufbereitet werden, die über eine standardisierte Schnittstelle zu dem Kommunikationsendgerät übertragen werden, in dem unter Zugrundelegung der aufbereiteten LVS-Ortungssignale Ortungsinformationen generiert werden, die auf wenigstens einem Ausgabemedium optisch, akustisch und/oder haptisch wahrnehmbar dargestellt werden.

9. Verfahren nach Anspruch 8,
**dadurch gekennzeichnet, dass** das Kommunikationsendgerät mit Hilfe wenigstens eines im Kommunikationsendgerät integrierten Sensorsystems, wenigstens eine der nachfolgenden Informationen generiert: geographische Position des Kommunikationsendgerätes, Luftdruck und/ Temperatur am Ort des Kommunikationsendgerätes, eine am Kommunikationsendgerät wirkende Beschleunigung, Erdmagnetfeld am Ort des Kommunikationsendgerätes; und dass zur Generierung der Ortungsinformationen neben der von dem Datenerfassungsmodul übertragenen, aufbereiteten LVS-Ortungssignale wenigstens eine der vorstehenden Informationen zugrunde gelegt wird.

10. Verfahren nach Anspruch 8 oder 9,
**dadurch gekennzeichnet, dass** das Kommunikationsendgerät über eine Zugangseinheit Informationen aus dem Internet bezieht, die zur Generierung der Ortungsinformationen neben der von dem Datenerfassungsmodul übertragenen aufbereiteten LVS-Ortungssignale zugrunde gelegt werden.

11. Computerprogramm enthaltend einen Programmcode zur Durchführung eines Verfahrens nach einem der Ansprüche 8 bis 10, bei dem der Programmcode auf der die übertragenen, aufbereiteten LVS-Ortungssignale verarbeitenden Funktionseinheit, die als Microchip basierte Rechnereinheit innerhalb des Kommunikationsendgerätes ausgebildet ist, ausgeführt wird.

## Claims

1. Locating system for avalanche rescue, having at least a data acquisition module for radio signals and having a mobile communication terminal,
**characterized in that**
- the data acquisition module and the communication terminal are each designed as separate units and each is enclosed by its own housing,
- the data acquisition module comprises a receiving part having a receiving antenna unit which is designed to receive standardised avalanche rescue radio signals, referred to as LVS locating signals,
- the data acquisition module provides means for preparing the received LVS locating signals,
- the data acquisition module provides an interface for the wired or wireless transmission of the prepared LVS locating signals to the communication terminal,
- the communication terminal contains a means that processes the transmitted, prepared LVS locating signals, referred to in the following as the functional unit, which generates the locating data or locating information, and
- at least one output medium is provided which displays the locating information visibly.

2. Locating system according to Claim 1,
**characterized in that** at least one means is provided which connects the data acquisition module and the communication terminal to each other firmly and detachably.

3. Locating system according to Claim 1 or 2, **characterized in that** besides the receiving part the data acquisition module comprises a transmitting part with a transmitting antenna unit for transmitting standardised avalanche rescue radio signals, referred to as LVS locating signals, which is combined to form a transmitting and receiving part.

4. Locating system according to Claim 2 or 3, **characterized in that** the at least one means is designed in the form of a mechanical connecting structure which connects the data acquisition module and the communication terminal to each other rigidly and pivotably about at least one spatial axis or via a flexible connecting structure.

5. Locating system according to any one of Claims 1 to 4, **characterized in that** the functional unit which processes the transmitted, prepared LVS locating signals is a microchip-based and software-controlled computing unit, and that the communication terminal includes an electrical energy storage unit, and
that the communication terminal contains at least one sensor system for generating a sensor signal, which signal can be delivered to the computing unit for generating the locating information, wherein the at least one sensor system can be chosen from the following sensor types: GPS sensor, acceleration sensor, geomagnetic field sensor, photosensor, image sensor, temperature sensor, gyrocompass air pressure sensor.

6. Locating system according to any one of Claims 1 to 5, **characterized in that** the at least one output medium is designed in the form of a display, a loudspeaker and/or a vibration unit, and
that the at least one output medium is integrated in the communication terminal or as a separate component which is able to exchange data with the communication terminal via a wired or wireless interface.

7. Locating system according to any one of Claims 3 to 6, **characterized in that** the transmitting and receiving part für radio signals is a commercial analogue or digital avalanche rescue device,
and that the avalanche rescue device is equipped with a loudspeaker and the communication terminal is equipped with a microphone, and that the means is designed as a mechanical support structure, in which both the transmitting and receiving part and the communication terminal can both be secured in such manner that loudspeaker and microphone are positioned directly opposite one another.

8. Method for locating a unit that transmits standardised avalanche rescue radio signals, referred to as LVS locating signals, by using a locating system according to any one of Claims 1 to 7,
**characterized in that** the LVS locating signals are captured and prepared by the data acquisition module, and are transmitted via a standardised interface to the communication terminal, in which locating information that is presented so as to be perceptible optically, acoustically and/or haptically on at least one output medium is generated on the basis of the prepared LVS location signals.

9. Method according to Claim 8,
**characterized in that** with the aid of at least one sensor system integrated in the communication terminal, the communication terminal generates at least one of the following items of information: geographic position of the communication terminal, air pressure and/or temperature at the location of the communication terminal, an acceleration acting on the communication terminal, geomagnetic field at the location of the communication terminal; and
that at least one of the aforementioned items of information is used besides the prepared LVS locating signals transmitted by the data acquisition module serves as the basis for generating the locating information.

10. Method according to Claim 8 or 9,
**characterized in that** the communication terminal obtains information from the internet via an access unit, which information serves besides the prepared LVS locating signals transmitted by the data acquisition module as the basis for generating the locating information.

11. Computer program containing a program code for carrying out a method according to any one of Claims 8 to 10, in which the program code is executed on the functional unit that processes the transmitted, prepared LVS signals, which functional unit is designed as a microchip-based computing unit within the communication terminal.

## Revendications

1. Système de localisation pour une recherche de victime d'avalanche comportant au moins un module d'acquisition de données pour signaux radio ainsi qu'un terminal de communication mobile, **caractérisé en ce que**
- le module d'acquisition de données et le terminal de communication sont chacun conçus comme des unités structurelles séparées, qui sont respectivement couvertes par leur propre boîtier,
- que le module d'acquisition de données comprend une partie de réception comportant une unité d'antenne de réception conçue pour recevoir des signaux radio d'avalanche normalisés, ou signaux de localisation LVS en abrégé,
- que le module d'acquisition de données fournit des moyens de traitement des signaux de localisation LVS reçus,
- que le module d'acquisition de données possède une interface pour la transmission filaire ou sans fil des signaux de localisation LVS traités au terminal de communication,
- que le terminal de communication contient un moyen, ci-après dénommé unité fonctionnelle, qui traite les signaux de localisation LVS traités transmis et qui génère des données pour la recherche, des informations de localisation en abrégé, et
- qu'au moins un support de sortie est prévu, qui représente les informations de localisation d'une manière perceptible.

2. Système de localisation selon la revendication 1, **caractérisé en ce qu'**il est prévu au moins un moyen, qui relie de manière amovible le module d'acquisition de données au terminal de communication.

3. Système de positionnement selon la revendication 1 ou 2, **caractérisé en ce que** le module d'acquisition de données en plus de la partie de réception comprend une partie d'émission comportant une unité d'antenne d'émission pour l'envoi de signaux radio d'avalanche normalisés, en abrégé signaux de localisation LVS, qui est combinée en une partie d'émission et de réception.

4. Système de localisation selon la revendication 2 ou 3, **caractérisé en ce que** le au moins un moyen se présente sous la forme d'une structure de liaison mécanique, qui relie l'un à l'autre le module d'acquisition de données et le terminal de communication, de manière rigide, pivotante au moins autour d'au moins un axe spatial ou via une structure de liaison flexible.

5. Système de localisation selon une des revendications 1 à 4, **caractérisé en ce que** l'unité fonctionnelle qui traite les signaux de localisation LVS transmis est une unité de calcul basée sur une micropuce et commandée par logiciel, et que le terminal de communication présente une unité de stockage d'énergie électrique et que le terminal de communication contient au moins un système de capteur pour la génération d'un signal de capteur qui peut être fourni à l'unité de calcul pour générer les informations de localisation, dans lequel au moins un système de capteur peut être sélectionné parmi les types de capteurs suivants : capteur GPS, capteur d'accélération, capteur de champ géomagnétique, capteur de lumière, capteur d'image, capteur de température, capteur de pression barométrique de compas gyroscopique.

6. Système de localisation selon une des revendications 1 à 5, **caractérisé en ce que** le au moins un support de sortie se présente sous la forme d'un écran, d'un haut-parleur et/ou d'un vibreur, et
**en ce que** le au moins un support de sortie est intégré dans le terminal de communication ou conçu comme un composant séparé, qui est en échange de données avec le terminal de communication via une interface filaire ou sans fil.

7. Système de localisation selon une des revendications 3 à 6, **caractérisé en ce que** la partie d'émission et de réception de signaux radio est un détecteur de victimes d'avalanche analogique ou numérique du commerce, et que le détecteur de victimes d'avalanche dispose d'un haut-parleur et la borne de communication d'un microphone, et **en ce que** le moyen est configuré comme une structure de support mécanique, dans laquelle la partie d'émission et de réception et le terminal de communication peuvent être fixés de telle manière que le haut-parleur et le microphone soient directement opposés l'un à l'autre.

8. Procédé de localisation d'une unité d'émission de signaux radio d'avalanche normalisés, en abrégé signaux de localisation LVS, utilisant un système de localisation selon une des revendications 1 à 7, **caractérisé en ce que** les signaux de localisation LVS sont détectés et traités par le module d'acquisition de données, qui sont transmis via une interface normalisée au terminal de communication, dans lequel, sur la base des signaux de localisation LVS traités, des informations de localisation sont générées, qui sont représentés de manière optiquement, acoustiquement et/ou haptiquement perceptibles sur au moins un support de sortie.

9. Procédé selon la revendication 8, **caractérisé en ce que** le terminal de communication utilise au moins un système de capteur intégré au terminal de communication pour générer au moins une des informations suivantes : position géographique du terminal de communication, pression atmosphérique et/ou température à l'emplacement du terminal de communication, accélération agissant sur le terminal de communication, champ magnétique terrestre à l'emplacement du terminal de communication ; et **en ce qu'**au moins une des informations ci-dessus est utilisée comme base pour générer les informations de localisation en plus des signaux de localisation LVS traités transmis par le module d'acquisition de données.

10. Procédé selon la revendication 8 ou 9, **caractérisé en ce que** le terminal de communication obtient des informations d'Internet via une unité d'accès, qui est utilisée comme base pour générer les informations de localisation en plus des signaux de localisation LVS traités transmis par le module d'acquisition de données.

11. Programme informatique contenant un code de programme pour la mise en œuvre d'un procédé selon une des revendications 8 à 10, dans lequel le code de programme est exécuté sur l'unité fonctionnelle qui traite les signaux de localisation LVS transmis et traités et est conçu comme une unité informatique à base de micropuce au sein du terminal de communication.
